# EUROPÄISCHE PATENTANMELDUNG

(11) **EP 1 883 006 A1**
(43) Veröffentlichungstag der Anmeldung: **30.01.2008**
(21) Anmeldenummer: 06014956.4
(22) Anmeldetag: 18.07.2006
(51) Int. Cl.: G06F 3/033, G06F 3/02

(54) **Eingabevorrichtung**

(71) Anmelder: SIEMENS AKTIENGESELLSCHAFT, 80333 München (DE)
(72) Erfinder: Lovleen Chadha, 121008 Faridabad, Haryana (IN)

(57) **Zusammenfassung**

Die Erfindung betrifft eine Eingabevorrichtung (1) zur zweidimensionalen Steuerung der grafischen Benutzeroberfläche eines Gerätes (2), insbesondere eines mobilen Endgerätes. Die Eingabevorrichtung (1) weist ein zylindrisches stabförmiges Element (3) auf, wobei eine berührungssensitive Schicht (4) auf dem Element (3) vorgesehen wird. Durch Rollen dieses Elements (3) wird die grafische Benutzeroberfläche in einer ersten Dimension navigiert, und durch Berühren auf die berührungssensitive Schicht (4) wird die grafische Benutzeroberfläche in einer zweiten Dimension navigiert.

## Beschreibung

Die Erfindung betrifft eine Eingabevorrichtung zur zweidimensionalen Steuerung der grafischen Benutzeroberfläche eines Gerätes, insbesondere eines mobilen Endgerätes.

Eingabegeräte zur Steuerung einer grafischen Benutzeroberfläche werden meist dazu verwendet, eine präzise zweidimensionale Steuerung (X- und Y-Koordinaten) der Benutzeroberfläche durch Bewegung eines Zeigersymbols (Cursor) zu ermöglichen. Solche Eingabegeräte werden in der Regel in Formen, wie z.B. Trackpads/Touchpads oder Rollkugeln (Trackballs), ausgestaltet. Sie funktionieren mit sensorischen oder mechanischen Bewegungsabtastungen.

Bei der immer weiter voranschreitenden Miniaturisierung und dem gleichzeitigen Anstieg der Funktionsvielfalt von mobilen Endgeräten bleiben die Möglichkeiten der Eingabe beschränkt. Z.B. umfangreiche Menüs können nur in kleinen Ausschnitten auf Displays navigiert werden. Auch ein herkömmliches Eingabegerät wäre nicht sehr benutzerfreundlich. Z.B. kann bei Anwendungen ein Touchpad sehr störend sein, weil unsinnige Bewegungen und Klicks von Benutzern leicht erzeugt werden können. Des Weiteren kann die Benutzeroberfläche auf Grund der sehr begrenzten Berührungsfläche eines Touchpads auch nur in kleinen Ausschnitten navigiert werden, wobei man seinen Finger auf der Berührungsfläche immer mühsam wiederholend ziehen muss. Um die Scrollgeschwindigkeit zu erhöhen bzw. die aufwendige Ziehwiederholung zu reduzieren, muss die Berührungsfläche des Touchpads ausgeweitet werden. Dies widerspricht aber der voranschreitenden Miniaturisierung von mobilen Endgeräten. Auch wenn Rollkugeln zur Verwendung kommen, besteht das Problem ebenfalls, da Rollkugeln zu tief in die Gerätgehäuse eindringen würden und dadurch der Platzbedarf steigt.

Für Verwendungen von berührungsempfindlichen Bildschirmen (Touchscreen) wird in der Regel ein weiteres Gerät - ein Stift - benötigt. Das bedeutet, dass ein Mehraufwand an Kosten entsteht und erfordert eine unbequeme Bedienung für einen Benutzer mit dem Stift, der u.U. leicht verloren gehen kann.

Der Erfindung liegt die Aufgabe zugrunde, eine Eingabevorrichtung zur zweidimensionalen Steuerung der grafischen Benutzeroberfläche eines Gerätes, insbesondere eines mobilen Endgerätes, zu schaffen.

Diese Aufgabe wird erfindungsgemäß durch eine Vorrichtung mit den Merkmalen des Patentanspruchs 1 gelöst. Weitere vorteilhafte Ausbildungen der Erfindung sind in den Unteransprüchen angegeben.

Der Erfindung liegt die Idee zugrunde, die Wirkungsfunktionen eines Touchpads und einer Rollkugel zusammen zu kombinieren. Dementsprechend wird eine Eingabevorrichtung zur zweidimensionalen Steuerung der grafischen Benutzeroberfläche eines Gerätes, insbesondere eines mobilen Endgerätes, ermöglicht. Die grafische Benutzeroberfläche besitzt üblicherweise zumindest ein Objekt (Menüeintrag), welches eine Menüfunktion repräsentiert bzw. darstellt. Die zweidimensionale Steuerung wird im Regelfall mittels eines kartesischen Koordinatensystems beschrieben. Die Eingabevorrichtung weist ein zylindrisches stabförmiges Element und eine berührungssensitive Schicht auf, wobei die berührungssensitive Schicht auf dem Element angeordnet ist. Durch Rollen des Elements wird die grafische Benutzeroberfläche in einer ersten Dimension navigiert und durch Berühren auf die berührungssensitive Schicht wird die grafische Benutzeroberfläche in einer zweiten Dimension navigiert. Damit können die Bewegungen eines Benutzers in das Koordinatensystem übertragen werden und z.B. durch einen Punkt dargestellt werden. Gegenüber Touchpads und Rollkugeln ist eine derartige Eingabevorrichtung besonderes für mobile Endgeräte (z.B. Mobiltelefon, PDA und mobile Bedien- und Beobachtungsgeräte) geeignet, da sie keine große berührungssensitive Fläche anfordert, und damit nur ein geringer Platzbedarf für den Einbau der Eingabevorrichtung notwendig ist. Zudem braucht die erfindungsgemäße Eingabevorrichtung nicht tief in das Gerätgehäuse eingebaut werden.

Vorteilhafterweise wird ein Cursor zur Verfolgung der zweidimensionalen Steuerung auf der grafischen Benutzeroberfläche dargestellt. Damit können beliebige Stellen der Benutzeroberfläche, wo die Menüfunktionen repräsentiert bzw. dargestellt sind, durch die Bewegungen des Cursors erreicht werden, um den entsprechenden Menüeintrag auszuwählen und die Instruktionen auszuführen.

Gemäß einer vorteilhaften Ausgestaltung der Erfindung wird die Eingabevorrichtung derart ausgebildet, dass ihre Betätigung durch einen Benutzer eine Eingabe auf der Benutzeroberfläche zur Folge hat. Bei einer Deckung des Cursors auf einen Menüeintrag wird eine entsprechende Funktion durch eine Tätigkeit des Benutzers, wie z.B. ein Drücken auf eine zusätzlich gebaute Taste oder auf das zylindrische stabförmige Element der Eingabevorrichtung, ausgeführt.

Gemäß einer anderen vorteilhaften Ausgestaltung der Erfindung wird mindestens eine Stütze zur Befestigung des Elements vorgesehen. Durch die Stütze kann das Element befestigt werden. Das Element kann ohne großen Aufwand auf- oder abgebaut werden. Da das Element das Gerätegehäuse nicht direkt kontaktiert, sondern auf die Stütze über das Gerätegehäuse gelegt wird, lässt sich das Element leicht und stabil rollen.

Nachfolgend wird die Erfindung anhand der in den Figuren dargestellten Ausführungsbeispiele näher beschrieben und erläutert. Es zeigen:
- FIG 1: ein mobiles Endgerät mit einer erfindungsgemäßen Eingabevorrichtung,
- FIG 2: eine Seitenansicht der erfindungsgemäßen Eingabevorrichtung mit Stützen.

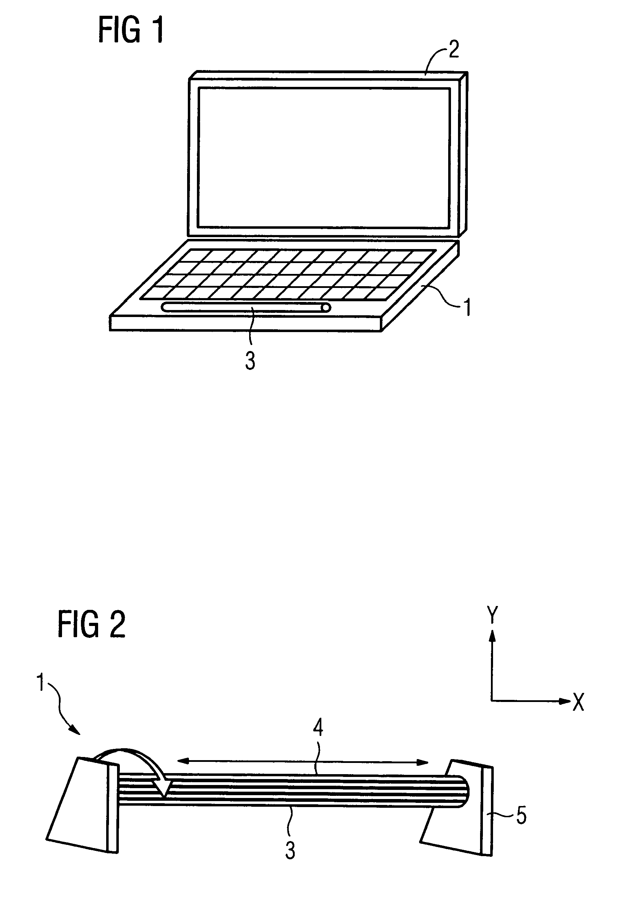

FIG 1 zeigt eine Eingabevorrichtung 1 zur zweidimensionalen Steuerung einer grafischen Benutzeroberfläche. Diese Eingabevorrichtung 1 ist beispielsweise in einem Laptop 2 eingesetzt. Die grafische Benutzeroberfläche wird auf dem Display des Laptops 2 dargestellt und enthält mehrere Menüeinträge, jeder Menüeintrag eine entsprechende Menüfunktion repräsentiert. Gegenüber Touchpads benötigt eine derartige Eingabevorrichtung 1 einen kleineren Platz, da sie keine große Berührungsfläche braucht. Sie ist auch nicht so anfällig für Störungen bzw. unsinnige Bewegungen von Benutzern. Im Vergleich zu Rollkugeln braucht die Eingabevorrichtung 1 nicht tief in das Gerätgehäuse eingebaut zu werden.

Gemäß FIG 2 wird eine Seitenansicht der oben genannten Eingabevorrichtung 1 gezeigt. Die Eingabevorrichtung 1 weist ein zylindrisches, stabförmiges Element 3 und eine berührungssensitive Schicht 4 auf, wobei die berührungssensitive Schicht 4 auf dem Element 3 angeordnet wird. Als Schicht 4 wird häufig eine berührungssensitive Folie verwendet. Üblicherweise weist das Element 3 oder die berührungssensitive Schicht 4 Gitter auf der Oberfläche auf, damit der Finger des Benutzers gut über die Oberfläche gleiten und die Benutzerfläche bequem gescrollt werden kann. In dieser beispielhaften Eingabevorrichtung 1 gibt es zwei Stützen 5 zur Befestigung des zylindrischen stabförmigen Elements 3. Das Element 3 wird waagrecht auf die zwei Stützen 5 aufgelegt. Dazu kann man noch zwei Lager jeweils zwischen dem Element 3 und den Stützen anordnen, um das Element 3 leicht und stabil zu rollen.

Die zweidimensionale Steuerung wird mittels eines kartesischen Koordinatensystems beschrieben. Ein Cursor wird zur Verfolgung der zweidimensionalen Steuerung auf der grafischen Benutzeroberfläche dargestellt. D.h. die Position des Cursors, welche infolge der Bewegungen von Benutzern ermittelt wurde, wird in der Koordinate entlang senkrecht aufeinander stehender Achsen gemessen. Durch Rollen des Elements 3 wird die grafische Benutzeroberfläche in der vertikalen Richtung (up and down) also entlang der Y-Koordinate navigiert. Durch Berühren auf die berührungssensitive Schicht 4 wird die grafische Benutzeroberfläche in der horizontalen Richtung also entlang der X-Koordinate navigiert. Der Laptop 2 hat mechanische oder optische Sensoren, die die Bewegungen des Elements 3 entlang zweier Achsen erfassen können. Damit können die Stellen der Benutzeroberfläche, wo die Menüfunktionen repräsentiert bzw. dargestellt sind, durch die Bewegungen des Cursors erreicht werden.

Der Benutzer kann die Benutzeroberfläche navigieren, wenn sich der Cursor, z.B. beim Ziehen des Fingers des Benutzers auf die Schicht 4, bewegt. Trifft der Cursor nach Wunsch des Benutzers einen Menüeintrag, kann er seinen Wunsch bestätigen, indem er mit einem leichten Stoss seines Fingers das Element 3 klickt. Dadurch wird eine dem Menüeintrag entsprechende Funktion ausgewählt. Außerdem, wenn man Objekte auf der Benutzeroberfläche markieren bzw. bewegen möchte, kann er entweder ein Doppelklick auf des Element 3 erzeugen oder eine zusätzliche Taste, die neben der Eingabevorrichtung 1 angeordnet ist.

## Patentansprüche

1. Eingabevorrichtung (1) zur zweidimensionalen Steuerung der grafischen Benutzeroberfläche, insbesondere eines mobilen Endgerätes,
**dadurch gekennzeichnet, dass**
die Eingabevorrichtung (1) ein zylindrisches stabförmiges Element (3) aufweist, wobei durch Rollen des Elements (3) die grafische Benutzeroberfläche in einer ersten Dimension navigierbar ist und eine berührungssensitive Schicht (4) auf dem Element (3) zum Navigieren der grafischen Benutzeroberfläche in einer zweiten Dimension vorgesehen ist.

2. Eingabevorrichtung (1) nach Anspruch 1,
**dadurch gekennzeichnet, dass**
ein Cursor zur Verfolgung der Navigation auf der grafischen Benutzeroberfläche darstellbar ist.

3. Eingabevorrichtung (1) nach Anspruch 1 oder 2,
**dadurch gekennzeichnet, dass**
die Eingabevorrichtung (1) derart ausgebildet ist, dass ihre Betätigung durch einen Benutzer eine Eingabe auf der Benutzeroberfläche zur Folge hat.

4. Eingabevorrichtung (1) nach einem der Ansprüche 1 bis 3,
**dadurch gekennzeichnet, dass**
mindestens eine Stütze (5) zur Befestigung des Elements (3) vorgesehen ist.

5. Ein elektrisches Gerät mit einer Eingabevorrichtung (1) nach einem der Ansprüche 1 bis 4.
